# EUROPEAN PATENT SPECIFICATION

(11) **EP 2 329 982 B1**
(45) Date of publication and mention of the grant of the patent: **03.04.2013**
(21) Application number: 10190772.3
(22) Date of filing: 11.11.2010
(51) Int. Cl.: B60K 6/48, B60W 30/192, F16D 48/02

(54) **Hybrid power driving system**
Hybridantriebssystem
Système d'entraînement hybride

(30) Priority: 11.11.2009 CN 200910221641
(43) Date of publication of application: 08.06.2011
(73) Proprietor: Byd Company Limited, Shenzhen 518118 (CN)
(72) Inventor: Ren, Yi, 518118, Shenzhen (CN); Yang, Shenglin, 518118, Shenzhen (CN); Li, Jun, 518118, Shenzhen (CN)
(74) Representative: Gulde Hengelhaupt Ziebig & Schneider

(56) References cited:
- EP-A2- 2 053 278
- DE-A1- 10 246 839
- DE-A1-102008 008 005

## Description

### BACKGROUND

### TECHNICAL FIELD

The present invention relates to a hybrid power driving system.

### DESCRIPTION OF THE RELATED ART

Generally, the hybrid power driving system in the prior art uses the hydraulic control system to control the clutches or brakes, so as to realize the transmission of the power in needed mode.

DE 102 46 839 A1 discloses a hybrid power driving system comprising an engine, a first clutch, a transmission mechanism including a transmission shaft, a first electric motor, a power supply and a hydraulic control system; wherein the engine is coupled with the transmission shaft via the first clutch, the first electric motor is electrically coupled with the power supply and an electric motor shaft of the first electric motor is coupled with the transmission mechanism. The hydraulic control system comprises an oil container for storing the hydraulic oil; a first oil pump, which is driven by the first electric motor; and a controller which is electrically coupled with the first electric motor; wherein the hydraulic control system further comprises an additional electric motor and a second oil pump. The additional electric motor is electrically coupled with the power supply and the controller respectively; the second oil pump is driven by the additional electric motor.

Generally, the hybrid power driving system comprises an engine, a transmission and an electric motor. In which, coupling the engine via the input shaft of the clutch and transmission and also coupling the input shafts of the electric motor and transmission, thereby the powers from the engine and electric motor may be coupled via the transmission.

For the hybrid power vehicles, the start of the vehicle may be realized by the drive of the electric motor. Thus the oil pump in the hydraulic control system is generally driven by the electric motor, and after the operation of the electric motor, the oil pump in the hydraulic control system may work normally to satisfy the control requirement for some component such as a clutch.

However, before the start of the vehicle, the clutch between the engine and the transmission is engaged. Thereby, if the vehicle drives the electric motor to start when the clutch is engaged, the power of the electric motor may be transmitted to the engine via the transmission and the electric motor may generate a drag on the engine, which may easily damage the piston jar of the engine.

Accordingly, a hybrid power driving system may be needed to avoid the damage of the engine when the vehicle is started.

### SUMMARY

The present invention is directed to solve at least one problem existing in the prior art. Accordingly, in order to overcome the damage of the engine during the start of a vehicle in a traditional hybrid power driving system, the present invention provides a hybrid power driving system which may avoid the damage of the engine.

According to an embodiment of the present invention, a hybrid power driving system is provided, which comprises an engine, a first clutch, a transmission mechanism including a transmission shaft, a first electric motor, a power supply and a hydraulic control system. The engine may be coupled with the transmission shaft via the first clutch. The first electric motor is electrically coupled with the power supply and the electric motor shaft of the first electric motor is coupled with the transmission mechanism. The hydraulic control system comprises:
an oil container for storing the hydraulic oil;
a first hydraulic cylinder which includes a cylinder and a piston rod to do reciprocating motion along the inner wall of the cylinder; the piston rod is coupled with the first clutch, configured to control the engaged or disengaged of the first clutch; and
a first oil pump, which is driven by the first electric motor; the first oil pump is configured to connect the oil container and the first hydraulic cylinder, used to supply hydraulic oil in the oil container to the first hydraulic cylinder; and
a controller which is electrically coupled with the first electric motor;
wherein, the hydraulic control system further comprises an additional electric motor and a second oil pump. The additional electric motor is electrically coupled with the power supply and the controller respectively. The second oil pump is driven by the additional electric motor. The second oil pump is configured to connect the oil container and the first hydraulic cylinder, used to supply the hydraulic oil in the oil container to the cylinder of the first hydraulic cylinder.

With reference to the hybrid power driving system of the present invention, the hydraulic control system further comprises an additional electric motor and a second oil pump, besides the first oil pump driven by the first electric motor. Thereby, during starting the vehicle, the additional electric motor may be driven by the controller, the hydraulic oil in the second oil pump may be supplied to the first hydraulic cylinder, so as to cause the disengaged of the first clutch to disconnected between the engine and the transmission shaft of the transmission mechanism. Then the controller may control the operation of the first electric motor, at that time, the operation of the first electric motor may not be transmitted to the engine by the transmission mechanism, which may not damage the engine, thus realizing the purpose of the present invention.

Preferably, the oil container is an oil pan of a transmission including the transmission mechanism; the oil pan of the transmission further includes lubricating oil which is used as the hydraulic oil in the hydraulic control system.

The hybrid power driving system may further comprise a second electric motor; the output shaft of the engine is coupled with the electric motor shaft of the second electric motor; the electric motor shaft is coupled with the first clutch and the transmission shaft.

Preferably, the hydraulic control system further comprises a first electromagnetic valve for controlling the connection or disconnection between the oil container and the first hydraulic cylinder; a second electromagnetic valve, by which the first oil pump and the second oil pump are connected with the first hydraulic cylinder; a first sensor for detecting the hydraulic pressure in the first hydraulic cylinder; the controller is electrically coupled with the first electromagnetic valve, the second electromagnetic valve and the first sensor respectively, which controls operation of the second oil pump and/or the first oil pump and connection or disconnection of the first electromagnetic valve and the second electromagnetic valve according to the hydraulic oil pressure signal in the first hydraulic cylinder detected by the first sensor.

In a preferred embodiment, the hydraulic control system further comprises a first energy accumulator, a first check valve and a second check valve. The first check valve is configured to connect the first oil pump and the second electromagnetic valve. The second check valve is configured to connect the second oil pump and the second electromagnetic valve. The first energy accumulator is connected with the first check valve, the second check valve and the second electromagnetic valve, configured to store at least a part of hydraulic oil in the first check valve and/or the second check valve and supply the hydraulic oil to the cylinder of the first hydraulic cylinder during connection of the second electromagnetic valve.

The hydraulic control system further may further comprise a second sensor for detecting the hydraulic pressure in the first energy accumulator; the controller is electrically coupled with the second sensor. The controller controls the operation of the first oil pump with reference to the hydraulic pressure in the first energy accumulator detected by the second sensor.

In that case, the hydraulic control system may further comprise a safe valve which is configured to connect the first energy accumulator and the oil container.

Preferably, the hydraulic control system further comprises a second hydraulic cylinder, which comprises a cylinder and a piston rode to do reciprocating motion along the inner wall of the cylinder; a third electromagnetic valve, which is configured to control the connection or disconnection between the first energy accumulator and the second hydraulic cylinder; a fourth electromagnetic valve, which is configured to control the connection or disconnection between the second hydraulic cylinder and the oil container; a third sensor, which is configured to detect the hydraulic pressure in the second hydraulic cylinder; and a second energy accumulator, which is connected with the third electromagnetic valve and the second hydraulic cylinder, configured to store at least a part of hydraulic oil passing through the third electromagnetic valve; wherein the third electromagnetic valve, the fourth electromagnetic valve and the third sensor are electrically coupled to the controller respectively. The controller controls the operation of the second oil pump and / or the first oil pump and the connection or disconnection between the third electromagnetic valve and the fourth electromagnetic valve with reference to the hydraulic pressure signal in the second hydraulic cylinder detected by the third sensor.

In a preferred solution, the hydraulic control system further comprises a damping device which comprises a first damping orifice located between the second electromagnetic valve and the first hydraulic cylinder and a second damping orifice located between the first electromagnetic valve and the oil container.

The first damping orifice may be less than the second damping orifice on the damping coefficient.

### BRIEF DESCRIPTION OF THE DRAWINGS

These and other aspects and advantages of the invention will become apparent and more readily appreciated from the following descriptions taken in conjunction with the drawings in which:
Fig. 1 shows a schematic diagram of the hybrid power driving system according to an embodiment of the present invention;
Fig. 2 shows a schematic diagram of the hybrid power driving system according to a preferred embodiment of the present invention;
Fig. 3 shows a schematic diagram of the connecting relations among the engine and the second electric motor and the transmission shaft of the transmission mechanism; and
Fig. 4 is a schematic diagram of the connecting relations of the second hydraulic cylinder of the hydraulic control system in the hybrid power driving system according to a preferred embodiment of the present invention.

The reference numerals of the main components in the figures are as follows:
- engine: 1
- flying wheel panel: 2
- driven part of the first clutch 4: 3
- first clutch: 4
- driving part of the first clutch 4: 5
- clutch cover: 6
- diaphragm spring: 7
- bearing: 8
- first hydraulic cylinder: 9
- first sensor: 10
- first damping orifice: 11
- second electromagnetic valve: 12
- first energy accumulator: 13
- third electromagnetic valve: 14
- second energy accumulator: 15
- fourth electromagnetic valve: 16
- first electromagnetic valve: 17
- second damping orifice: 18
- second hydraulic cylinder: 19
- third sensor: 20
- third damping orifice: 21
- second sensor: 22
- safe valve: 23
- first check valve: 24
- second oil pump: 25
- first oil pump: 26
- first electric motor: 27
- transmission mechanism: 28
- half shaft and wheel: 29
- lubricating oil (hydraulic oil): 30
- filter: 31
- shaft of the second electric motor 34: 33
- second electric motor: 34
- stator of the second electric motor 34: 35
- transmission shaft: 36
- cylinder of the first hydraulic cylinder 9: 37
- piston rod of the first hydraulic cylinder 9: 38
- cylinder of the second hydraulic cylinder 19: 40
- piston rod of the second hydraulic cylinder 19: 41
- second check valve: 42

### DETAILED DESCRIPTION

Reference will be made in detail to embodiments of the present invention. The embodiments described herein with reference to drawings are explanatory, illustrative, and used to generally understand the present invention. The embodiments shall not be construed to limit the present invention. The same or similar elements and the elements having same or similar functions are denoted by like reference numerals throughout the descriptions.

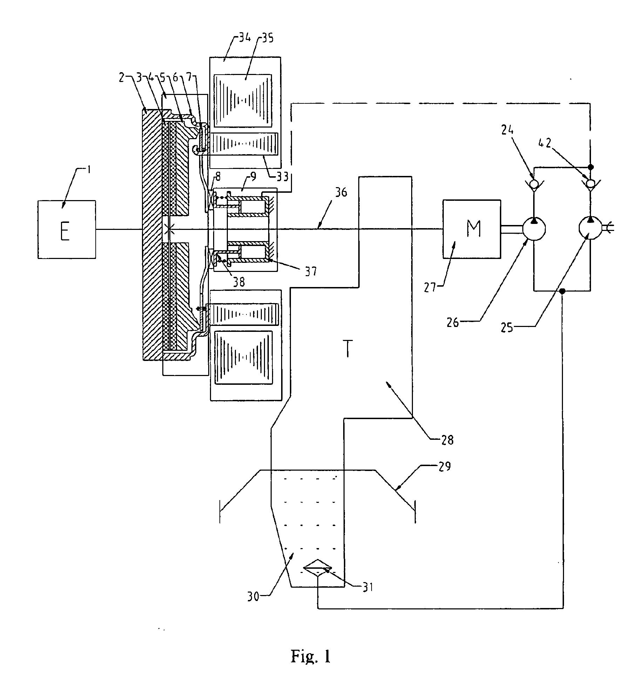

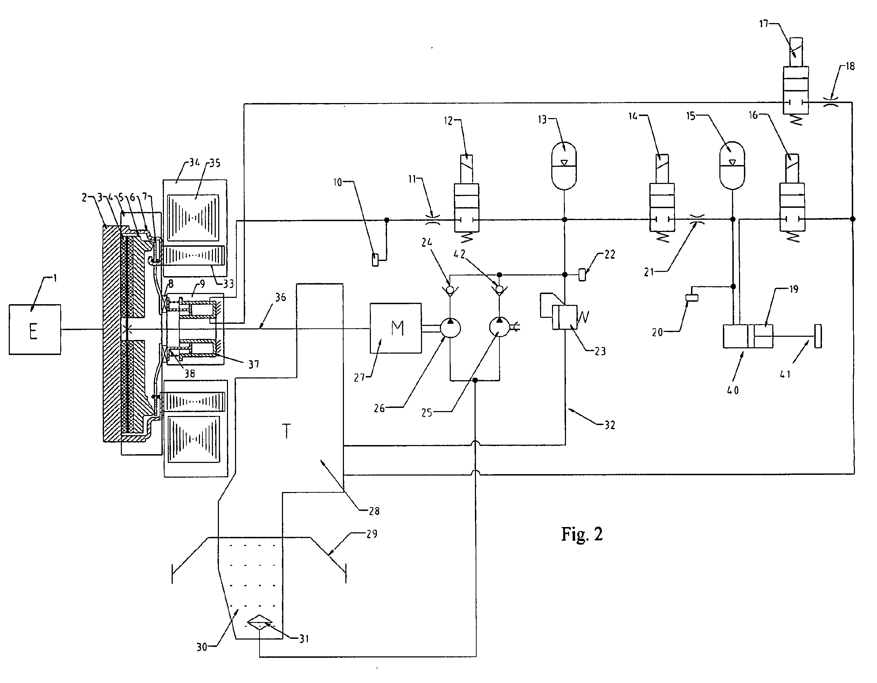

As shown in Fig. 1 and Fig. 2, an embodiment of the present invention provides a hybrid power driving system comprising an engine 1, a first clutch 4, a transmission mechanism 28 including a transmission shaft 36, a first electric motor 27, a power supply and a hydraulic control system. The engine 1 is coupled with the transmission shaft 36 via the first clutch 4. The first electric motor 27 is electrically coupled with the power supply and the electric motor shaft of the first electric motor 27 is coupled with the transmission mechanism 28.

The hydraulic control system comprises:
an oil container for storing the hydraulic oil;
a first hydraulic cylinder 9, which comprises a cylinder 37 and a piston rod 38 to do reciprocating motion along the inner wall of the cylinder 37; the piston rod 38 is coupled with the first clutch 4 to control the engaged or disengaged of the clutch 4;
the first oil pump 26, which is driven by the first electric motor 27; the first oil pump 26 is configured to connect the oil container and the first hydraulic cylinder 9, used to supply the hydraulic oil in the oil container to the cylinder 37 of the first hydraulic cylinder 9; and
a controller (not shown), which is electrically coupled with the first electric motor 27;

In which, the hydraulic control system further comprises an additional electric motor (not shown) and a second oil pump 25. The additional electric motor is electrically coupled with the power supply and the controller. The second oil pump 25 is driven by the additional electric motor. The second oil pump 25 is configured to connect with the oil container and the first hydraulic cylinder 9 and to supply the hydraulic oil in the oil container to the first hydraulic cylinder 9.

With reference to the hybrid power control system of the present invention, before the first electric motor 27 drives the vehicle (the hydraulic oil in the hydraulic control system has no hydraulic power supply, which may not drive the first hydraulic cylinder 9). However the controller may control the additional electric motor to drive the second oil pump 25. Thereby, the second oil pump 25 may drive the first hydraulic cylinder 9 to cause the disengaged of the clutch 4 so as to disconnect the engine 1 from the transmission mechanism 28. Meanwhile, during vehicle operation, the controller may control the start of the additional electric motor to drive the operation of the second oil pump 25, and thereby the second oil pump 25 and the first oil pump 26 may be used as the power supply of the hydraulic control system.

However, when the engine 1 and the transmission mechanism 28 are disconnected, the first electric motor 27 may start the vehicle without turning the engine shaft, thus avoiding the defect of damaging the engine easily in the hybrid power driving system in the prior art.

The oil container in the hydraulic control system may be worked as the hydraulic oil case in vehicle. Preferably, the oil container may be an oil pan of a transmission including a transmission mechanism 28 and the lubricating oil stored in the oil pan of the transmission is used as the hydraulic oil of the hydraulic control system.

The lubricating oil 30 (hydraulic oil) stored in the oil pan of the transmission may not only be used to lubricate the transmission mechanism in the transmission, but also, be supplied to the hydraulic control system via the filter 31, thereby to cause the structure to be compact and save the hydraulic oil.

During operation of vehicle, the heat from the transmission mechanism 28 may be transmitted to the lubricating oil stored in the oil pan of the transmission. Moreover, after the vehicle starts for a while, the transmission mechanism may agitate the oil in the oil pan to cause the temperature of the oil in transmission to be higher, so as to avoid the instance that the oil is freezing or thick, not to pump oil. Thereby, the superfluous heat in operation of the transmission mechanism 28 may be used, to realize the function of energy saving; on the other hand, the structure aforementioned may be quite suit for the cold area, such as closing with two poles of the earth, Russia, Norway etc. The lubricating oil of the gear shifting mechanism or the engine working as the hydraulic oil of the hybrid power driving system, may ensure great liquidity without extra heater, and ensure the reliable operation of the hybrid power control system, thus the whole structure may be more compact.

In a preferred embodiment of the present invention, the hybrid power driving system may further comprise a second electric motor 34. The output shaft of the engine 1 is coupled with the electric motor shaft 33 of the second electric motor 34. The electric motor shaft 33 may be coupled with the transmission shaft 36 via the first clutch 4, in accordance with Fig. 1 and Fig. 2.

The hybrid power driving system according to Fig. 1 and Fig. 2, at least includes following driving mode:

When the first clutch 4 is engaged by the hydraulic control system, the engine 1 and the first electric motor 27 may together drive the vehicle, as well as the second electric motor 34. When the first clutch 4 is disengaged by the hydraulic control system, the engine 1 may drive the second electric motor 34 to generate electricity so as to charge power supply (such as all kinds of secondary battery packs), at that time, the first electric motor 27 may be not in work to drive the vehicle, and the vehicle is parking and generating electricity.

When the first clutch 4 is disengaged, the first electric motor 27 may drive the vehicle alone, at that time, which is the pure electric driving mode.

When the first clutch 4 is engaged, the first electric motor 27 may not work but the engine 1 may drive the vehicle, and the second electric motor 34 may generate electricity or be in idle running, which is the pure engine driving mode.

The transmission mechanism 28 may be used to transmit the power from the power source (including the engine and electric motor) to the half shaft and the wheel 29 so as to drive the vehicle. According to embodiments of the present invention, the transmission mechanism 28 may be selected from multiple transmission mechanisms, such as gears mechanism, planetary gear mechanism and so on.

The power supply may be electrically coupled with the first electric motor 27 and the second electric motor 34 to supply power to the first electric motor 27 and the second electric motor 34. The power supply may be all kinds of mobile power supply equipments, such as lithium-iron secondary cell, storage battery and so on. The electric motor shaft of the second electric motor 34 may be coupled with the transmission mechanism 28, which is not limited to the connection between the electric motor shaft of the second electric motor 34 and the transmission shaft 36 in Fig. 1 and Fig.2 (for example, the transmission shaft 36 may work as the input shaft of the transmission mechanism 28). For example, the electric motor shaft of the second electric motor 34 may be coupled with the output shaft of the transmission mechanism 28, to directly transmit the power from the second electric motor 34 to the half shaft and the wheel 29.

Moreover, it is not necessary to set the second electric motor 34. In some embodiment, the second electric motor 34 is not set, the output shaft of the engine 1 may be directly coupled with the transmission shaft 36 of the transmission mechanism 28 via the first clutch 4.

In order to control the operation of the first hydraulic cylinder 9 reliably, preferably, the hydraulic control system further comprises: a first electromagnetic valve 17 for controlling the connection or disconnection between the oil container and the first hydraulic cylinder 9; a second electromagnetic valve 12, by which the first oil pump 26 and the second oil pump 25 are coupled with the first hydraulic cylinder 9; a first sensor 10 for detecting the hydraulic pressure in the first hydraulic cylinder 9; the controller is electrically coupled with the first electromagnetic valve 17, the second electromagnetic valve 12 and the first sensor 10 respectively, which controls operation of the second oil pump 25 and/or the first oil pump 26 and connection or disconnection of the first electromagnetic valve 17 and the second electromagnetic valve 12 according to the hydraulic oil pressure signal in the first hydraulic cylinder 9 detected by the first sensor 10.

During common instance, when the first electric motor 27 is working, the first oil pump 26 may keep working. Thus, the connection or disconnection between the first oil pump 26 and the first hydraulic cylinder 9 may be controlled by the second electromagnetic valve 12. When the first hydraulic cylinder 9 works, the first electromagnetic valve 17 may be cut off and the first oil pump 26 may be in operation, thereby, the hydraulic oil stored in the oil container may be transmitted to the cylinder 37 of the first hydraulic cylinder 9 via the first oil pump 26, so as to increase the hydraulic pressure of the hydraulic oil in the first hydraulic cylinder 9 and cause the first hydraulic cylinder 9 to work.

The first sensor 10 may be used to detect the hydraulic pressure of the hydraulic oil in the first hydraulic cylinder 9. The first sensor 10 may be further worked as the existing all kinds of sensors to detect the hydraulic pressure of the hydraulic oil.

The controller (such as PLC, Single Chip Microcomputer, ECU of the vehicle and so on) may be electrically coupled with the first sensor 10, to receive the hydraulic pressure signal of the hydraulic oil detected by the first sensor 10 and compare the detected hydraulic pressure with the predetermined hydraulic pressure, thus to determine whether the hydraulic pressure in the first hydraulic cylinder 9 is suitable, so as to determine whether the action of the first hydraulic cylinder 9 is right, for example, the journey of the piston rod 38 reaches the predetermined journey or not.

The controller may be further electrically coupled with the first electromagnetic valve 17, the second electromagnetic valve 12 and the first electric motor 27. With reference to the hydraulic pressure difference detected by the first sensor 10, the controller may control the connection or disconnection of the first electromagnetic valve 17 and the second electromagnetic valve 12 and the operation of the second oil pump 25 and / or the first oil pump 26 (for example the rotational speed of the first electric motor 27.

When the hydraulic pressure in the first hydraulic cylinder 9 detected by the first sensor 10 is less than the predetermined hydraulic pressure, the controller may control the first oil pump 26 to keep operation, the first electromagnetic valve 17 may keep disconnection, thereby, the first oil pump 26 may keep transmitting the hydraulic oil to the first hydraulic cylinder 9 to increase the hydraulic pressure in the first hydraulic cylinder 9. When the hydraulic pressure in the first hydraulic cylinder 9 detected by the first sensor 10 is higher than the predetermined hydraulic pressure, the controller may control the first oil pump 26 to stop operation, the second electromagnetic valve 12 may be disconnected, the first electromagnetic valve 17 may be connected, thus, the hydraulic oil having high pressure in the first hydraulic cylinder 9 may flow into the oil container, to decrease the hydraulic pressure in the first hydraulic cylinder 9. When the hydraulic pressure in the first hydraulic cylinder 9 detected by the first sensor 10 is equal to the predetermined hydraulic pressure or in the allowed tolerance range of the predetermined hydraulic pressure, the controller may control the first electromagnetic valve 17 to be disconnected, the second electromagnetic valve 12 to be disconnected, at that time, the hydraulic pressure in the first hydraulic cylinder 9 may keep constant.

From aforementioned description, a hydraulic control system of the hybrid power drive system according to the present invention may accurately control the hydraulic pressure in the first hydraulic cylinder 9 and consequently the action of the first clutch 4 may be controlled accurately.

As the first hydraulic cylinder 9 controls the clutch 4, due to the hydraulic pressure in the first hydraulic cylinder 9 may be controlled accurately, the action of the first clutch 4 (for example connection or disconnection) may be controlled accurately.

The first clutch 4 may be any of the dry clutches or wet clutches although it is typically a dry clutch. The first clutch 4 may be worked to realize connection or disconnection of the power between the first electric motor 27 and the engine 1. The piston rod 38 of the first hydraulic cylinder 9 may be coupled with the first clutch 4 to realize the engaged or disengaged of the first clutch 4 according to the action of the piston rod 38.

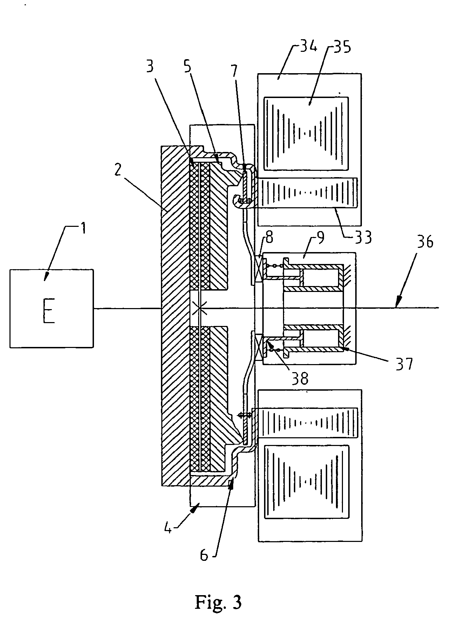

As shown in Fig. 1, Fig. 2 or Fig. 3, especially to Fig. 3, in order to make the structure compact so that the first clutch 4 and first hydraulic cylinder 9 can be added, the second electric motor 34 may comprise a stator 35 and a rotator. The electric motor shaft 33 may be hollow and serve as the rotator. The engine 1 may be coupled with the electric motor shaft 33 of the second electric motor 34 via a connector having a chamber, and the first clutch 4 may be located in the chamber of the connector.

The connector may be a part prepared in one body or may comprise multiple components, as long as it can realize reliably couple the main shaft of the engine 1 and the shaft 33 of the second electric motor 34. As shown in Fig. 3, the connector may include a flying wheel panel 2 and a clutch cover 6.

The first clutch 4 may be set in the chamber of the connector configured to couple the engine 1 and the second electric motor 34. The first clutch 4 may not occupy quite large exterior space, thus realizing the compact of the structure. Moreover, the first clutch 4 may be the dry clutch to get the more compact structure. The driven part 3 of the first clutch 4 may be fixedly connected with the transmission shaft 36. And the driving part 5 of the first clutch 4 may be coupled with the piston rod 38 of the first hydraulic cylinder 9 via a connector (for example, comprising a diaphragm spring 7 and a bearing 8 used as the hydraulic release bearing of the first hydraulic cylinder 9, or the driving part 5 may be directly fixedly connected with the piston rod 38). When the driving part 5 of the first clutch 4 may slide to couple the driven part 3, the first clutch 4 may be engaged. When the driving part 5 of the first clutch 4 slides to disconnect the driven part 3, the first clutch 4 may be disengaged. The driving part 5 of the first clutch 4 may be controlled by the piston rod 38 of the first hydraulic cylinder 9.

In an embodiment of the present invention, the first hydraulic cylinder 9 may be located in a hollow part of the electric motor shaft 33 of the second electric motor 34, thus, the first hydraulic cylinder 9 preferably is compact. Moreover, the piston rod 38 of the first hydraulic cylinder 9 may be coupled with the driving part 5 of the first clutch 4. When there is no pressurized hydraulic oil in the first hydraulic cylinder 9, the driving part 5 of the first clutch 4 may be engaged with the driven part 3 to engage the first clutch 4. When the first hydraulic cylinder 9 is supplied with the pressurized hydraulic oil, the piston rod 38 of the first hydraulic cylinder 9 may drive the connector above mentioned to cause the driving part 5 of the first clutch 4 is disengaged with the driven part 3, that means, the first clutch 4 is in disengaged. With reference to different construction, also, when the first hydraulic cylinder 9 has no hydraulic oil, the first clutch 4 may be disengaged; when the first hydraulic cylinder 9 has hydraulic oil, the first clutch 4 may be engaged. However, no matter what instance, the first clutch 4 may be controlled by the first hydraulic cylinder 9, thereby, the driving part 5 of the first clutch 4 may have action under the drive of the piston rod 38, to realize the engaged and disengaged of the first clutch 4.

In some embodiment of the present invention, there may be one or multiple first hydraulic cylinders 9 selected from the traditional hydraulic cylinder to drive the driving part 5 of the first clutch 4. In order to satisfy the working condition in Fig. 1, preferably, the cylinder 37 and the piston rod 38 may be annular, for the transmission shaft 36 passing through the hollow portion of the annular cylinder 37 and the piston rod 38.

The connecting relation between the hydraulic control system and the first clutch 4 has been described above, there will be detailed description about the hydraulic control system of the hybrid power drive system of the present invention hereinafter.

In some embodiment of the present invention, the hydraulic control system further comprises a first energy accumulator 13, a first check valve 24 and a second check valve 42. The first check valve 24 may be connected with the first oil pump 26 and the second electromagnetic valve 12 and the second check valve 42 may be connected with the second oil pump 25 and the second electromagnetic valve 12. The first energy accumulator 13 may be connected with the first check valve 24, the second check valve 42 and the second electromagnetic valve 12, used to store at least a part of the hydraulic oil passing through the first check valve 24 and / or the second check valve 42 and supply the hydraulic oil to the first hydraulic cylinder 9 after connecting the second electromagnetic valve 12.

Making use of the first check valve 24, the second check valve 42 and the first energy accumulator 13, the hydraulic oil with high pressure may be supplied to the first hydraulic cylinder 9 quickly.

For example, during the non-operation of the hydraulic control system, only the first oil pump 26 works, and the first electromagnetic valve 17 and the second electromagnetic valve 12 may be in broken, the hydraulic oil with high pressure in the first oil pump 26 may flow into the first energy accumulator 13, passing through the first check valve 24, then stored in the first energy accumulator 13. Because of the existence of the first check valve 24, the hydraulic oil stored in the first energy accumulator 13 may not flow back to the oil container.

When the hydraulic control system of the present invention in operation, the second electromagnetic valve 12 may be connected, the hydraulic oil with high pressure may flow into the first hydraulic cylinder 9, passing through the second electromagnetic valve 12, thus the piston rod 38 of the first hydraulic cylinder 9 may be driven to move. Comparing with that between the first oil pump 26 and the second electromagnetic valve 12 has a quite large hydraulic channel, due to the direct connection between the first energy accumulator 13 and the second electromagnetic valve 12, the hydraulic oil with high pressure may be transmitted into the first hydraulic cylinder 9 more quickly. Moreover, if the quantity of the hydraulic oil in the first energy accumulator 13 is not sufficient, the hydraulic oil may be supplied to the first hydraulic cylinder 9 via the first oil pump 26 and the first energy accumulator 13 together. The operation instance of the second check valve 42 is similar to the first check valve 24 and the description of which will be omitted herein for conciseness.

Due to the direct connection between the first energy accumulator 13 and the second electromagnetic valve 12, comparing with that between the first oil pump 26 and the second electromagnetic valve 12 has a quite large hydraulic channel (transmitting the hydraulic oil to the first hydraulic cylinder 9 via the first oil pump 26, requires that the hydraulic oil may flow from the oil container under the operation of the first oil pump 26, then to the first hydraulic cylinder 9, obviously, the process may need more time), the first energy accumulator 13 may transmit the hydraulic oil with high pressure to the first hydraulic cylinder 9 more quickly.

In some embodiment, the hydraulic control system may further comprise a second sensor 22, for detecting the hydraulic pressure of the hydraulic oil in the first energy accumulator 13. The controller may be electrically coupled with the second sensor 22. And the controller may control the operation of the first oil pump 26 according to the hydraulic pressure of the hydraulic oil in the first energy accumulator 13 detected by the second sensor 22.

If the hydraulic pressure of the hydraulic oil in the first energy accumulator 13 detected by the second sensor 22 is lower than the predetermined hydraulic pressure (or the tolerance range of the predetermined hydraulic pressure), the controller may control the operation of the first oil pump 26, transmitting the hydraulic oil in the oil container to the first energy accumulator 13. Thus, the hydraulic pressure of the hydraulic oil in the first energy accumulator 13 may be improved until the hydraulic pressure of the hydraulic oil in the first energy accumulator 13 reaches a predetermined hydraulic pressure (or the tolerance range of the predetermined hydraulic pressure). That means, if the hydraulic pressure of the hydraulic oil in the first energy accumulator 13 detected by the second sensor 22 reaches the acceptable level, the controller may stop or slow down the operation of the first oil pump 26.

In order to avoid the over high hydraulic pressure of the hydraulic oil in the first energy accumulator 13 may badly influence the hydraulic system, the hydraulic control system may further include a safe valve 23. The safe valve 23 generally works as a pressure control valve to avoid the hydraulic pressure of the hydraulic oil in the hydraulic system to exceed the safe level (for example, the safe valve may be a relief valve or overflow valve). If the hydraulic pressure of the hydraulic oil in the first energy accumulator 13 does not exceed the allowed range, the safe valve 23 may be broken. If the hydraulic pressure of the hydraulic oil in the first energy accumulator 13 exceeds the allowed range, the safe valve 23 may be engaged to cause the hydraulic oil in the first energy accumulator 13 to flow into the oil container, which may relief the pressure. Meanwhile, the safe valve 23 may be electrically coupled with the controller.

During the driving system of the vehicle, a second clutch or a brake (non-shown), for example, the electric motor shaft of the first electric motor 27 may be coupled with the transmission shaft 36 via the second clutch; the transmission mechanism 28 comprises a planetary gearing mechanism. The transmission shaft 36 may be fixedly connected with the planetary carrier of the planetary gearing mechanism. The electric motor shaft of the first electric motor 27 may be fixedly connected with the solar wheel of the planetary gearing mechanism. Thereby, the powers from the engine 1, the first electric motor 27 and the second electric motor 34 may be coupled and be transmitted to the half shaft and the wheel 29 of the vehicle.

In order to satisfy the use of the hybrid power driving system, preferably, the hydraulic control system further comprises:
a second hydraulic cylinder 19, which comprises a cylinder 40 and a piston rod 41 to do reciprocating motion along the cylinder 40;
a third electromagnetic valve 14, which is located between the second hydraulic cylinder 19 and the first energy accumulator 13, used to control the connection or disconnection between the first energy accumulator 13 and the second hydraulic cylinder 19;
a fourth electromagnetic valve 16, which is used to control the connection or disconnection between the second hydraulic cylinder 19 and the oil container;
a third sensor 20, which is used to detect the hydraulic pressure in the second hydraulic cylinder 19; and
a second energy accumulator 15, which is connected with the third electromagnetic valve 14 and the second hydraulic cylinder 19, used to store at least a part of hydraulic oil passing through the third electromagnetic valve 14;

In which, the third electromagnetic valve 14, the fourth electromagnetic valve 16 and the third sensor 20 are electrically coupled to the controller respectively. The controller controls the open or close of the third electromagnetic valve 14 and the fourth electromagnetic valve 16 with reference to the hydraulic pressure signal in the second hydraulic cylinder 19 detected by the third sensor 20.

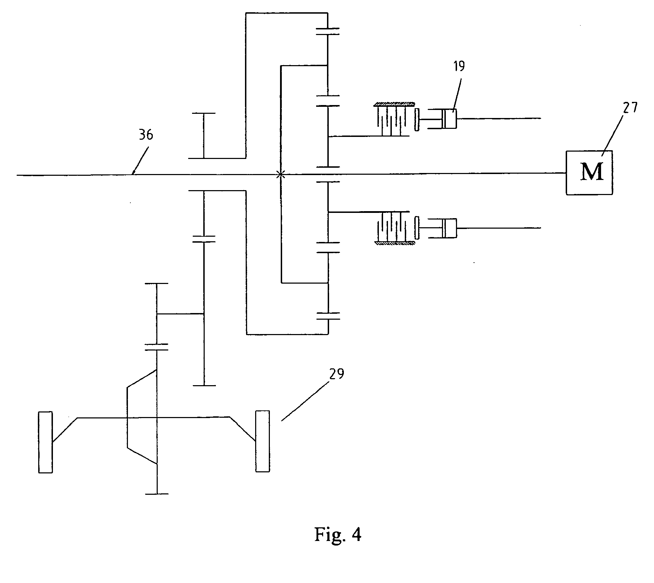

Via the piston rod 41 of the second hydraulic cylinder 19, the second clutch may be controlled to realize the engaged and disengaged of the second clutch; or at least a solar wheel of the planetary gearing mechanism may be braked to get different transmission ratios, as shown in Fig. 4.

The third sensor 20 may detect the stroke position or stroke distance of the piston rod 41 of the second hydraulic cylinder 19. Under the control of the controller, the hydraulic pressure in the second hydraulic cylinder 19 may be adjusted via the open or close of the third electromagnetic valve 14, the fourth electromagnetic valve 16 and the operation of the second oil pump 25, to control the action of the second hydraulic cylinder 19, for example, the piston rod 41 of the second hydraulic cylinder 19 may have a quite high stroke accuracy, which is similar to the control of the stroke accuracy of the piston rod 38 of the first hydraulic cylinder 9, and no need of more detailed description.

The second hydraulic cylinder 19 may be a hydraulic release bearing, which is coupled with a dry clutch to control the engaged and disengaged of the dry clutch. Using the hybrid power driving system of the present invention, the hydraulic pressure in the second hydraulic cylinder 19 may be accurately controlled. Thereby, using the hybrid power driving system of the present invention, the action (engaged or disengaged) of the dry clutch may be more accurate.

The second hydraulic cylinder 19 may be applied to the wet clutch, coupled with the wet clutch in the vehicle, to control the action of the wet clutch.

When the second hydraulic cylinder 19 is applied to the wet clutch, due to that the hydraulic control system further has a second energy accumulator 15, the second energy accumulator 15 may be connected with the third electromagnetic valve 14 and the second hydraulic cylinder 19, as shown in Fig. 1. Thereby, before the hydraulic oil with high pressure from the first energy accumulator 13 flows into the second hydraulic cylinder 19 as the third electromagnetic valve 14 is open, the hydraulic oil with high pressure may flow into the second energy accumulator 15 first, and may flow into the second hydraulic cylinder 19 after the buffering in the second energy accumulator 15, thus to avoid the bad influence caused by the hydraulic oil with high pressure directly flowing into the second hydraulic cylinder 19.

In some embodiment, for the hydraulic control system, the hydraulic oil with high pressure may be provided into the first hydraulic cylinder 9 and the second hydraulic cylinder 19 via the oil pump (such as the first oil pump 26) and / or energy accumulator (such as the first energy accumulator 13 and the second energy accumulator 15). When the hydraulic oil with high pressure provided into the hydraulic cylinder above makes use of the energy accumulator, the hydraulic oil with high pressure may be quickly transmitted into the hydraulic cylinder, thereby, having a quite high work efficiency.

Preferably, the hydraulic control system may further comprise a damping device, which may comprise a first damping orifice 11 between the second electromagnetic valve 12 and the first hydraulic cylinder 9 and a second damping orifice 18 at pipeline between the first electromagnetic valve 17 and the oil container. The above damping device setting at the channel of the hydraulic control system, may retard the impact of hydraulic oil with high pressure in operation, avoiding the bad influence the hydraulic components.

Due to the existence of the first damping orifice 11, time for transmitting the hydraulic oil with high pressure to the first hydraulic cylinder 9 may be prolonged, which may reduce the requirement for the second electromagnetic valve 12 and the electromagnetic valve with slow response speed may be available. Moreover, the second damping orifice 18 may avoid the wet clutch discharges overmuch hydraulic oil, so as to produce a back pressure.

In some embodiment, to retard the impact of the hydraulic oil with high pressure flowing into the second hydraulic cylinder 19, a third damping orifice 21 may be set between the third electromagnetic valve 14 and the second hydraulic cylinder 19.

The damping orifice may be all kinds of orifices, for example, reducing the closure area of the hydraulic pipeline, may realize the function of damping; and also a throttle valve capable for determining the closure area may work as a damping orifice in the hydraulic pipeline.

When the piston rod 38 of the first hydraulic cylinder 9 connected with the first clutch 4 protrudes, the clutch 4 may be disengaged; when the piston rod 38 returns, the clutch 4 may be engaged. Thereby, the first damping orifice 11 is less than the second damping orifice 18 on the damping coefficient to avoid the quit large impact from the engagement of the clutch.

Due to the first damping orifice 11 is less than the second damping orifice 18 on the damping coefficient, when hydraulic oil with high pressure flows from the first energy accumulator 13 to the hydraulic cylinder 9, the hydraulic oil suffers a little damping, and the first clutch 4 may be disengaged quickly. During the hydraulic oil with high pressure flows from the first hydraulic cylinder 9 to oil container, passing through the first electromagnetic valve 17 and the second damping orifice 18, the hydraulic oil suffers large damping, thus the engagement of the clutch may be retarded relatively, with less impact.

There has been detailed description to the components of the hybrid power drive system and the connecting relation thereof, and the following description may be given to the operation process of the hybrid power drive system combining with the embodiment in Fig. 1, to understand the technical solution more in-depth.

With reference to Fig. 2, the second electromagnetic valve 12 and the third electromagnetic valve 14 are open, and the hydraulic oil in the oil container may be supplied to the first energy accumulator 13 by the first oil pump 26, passing though the first check valve 24, thereby the hydraulic oil with high pressure may be stored in the first energy accumulator 13. When the hydraulic pressure in the first energy accumulator 13 detected by the second sensor 22 is insufficient, the controller may control the operation of the first oil pump 26 according to the hydraulic pressure signal detected by the second sensor 22 until the hydraulic pressure in the first energy accumulator 13 detected by the second sensor 22 reaches the predetermined hydraulic pressure. When the hydraulic pressure in the first energy accumulator 13 may be overhigh, it is needed to release pressure by the safe valve23. Thus, the hydraulic pressure in the first energy accumulator 13 may be maintained in a reasonable range.

When the first hydraulic cylinder 9 coupled to the first clutch 4 (dry clutch) starts to work, the controller may control the turn-on of the second electromagnetic valve 12 and the turn-off of the first electromagnetic valve 17, so as to that, the hydraulic oil with high pressure in the first energy accumulator 13 may flow into the first hydraulic cylinder 9, passing through the second electromagnetic 12, to drive the first hydraulic cylinder 9. Moreover, by the cooperation among the first sensor 10, the first electromagnetic valve 17 and the second electromagnetic 12, the hydraulic pressure in the first hydraulic cylinder 9 may be controlled accurately, then the stroke of the piston rod 38 may be controlled accurately, which is given detailed description and no need of more detailed description herein.

When the hydraulic pressure in the first hydraulic cylinder 9 is needed to decrease, under the control of the controller, the second electromagnetic 12 may be turn-off and the first electromagnetic valve 17 may be turn-on, which may cause that the hydraulic oil in the first hydraulic cylinder 9 flows to the oil container.

When the second hydraulic cylinder 19 coupled to the second clutch (wet clutch) starts to work, under the control of the controller, the third electromagnetic valve 14 may be turn-on and the fourth electromagnetic valve 16 may be tum-off, which may cause the hydraulic oil with high pressure in the first energy accumulator 13 flows to the second energy accumulator 15, as well as to the second hydraulic cylinder 19, thus improving the hydraulic pressure in the second hydraulic cylinder 19.

When the hydraulic pressure in the second hydraulic cylinder 19 is needed to decrease, under the control of the controller, the third electromagnetic valve 14 may be turn-off and the fourth electromagnetic valve 16 may be turn-on, which may cause the hydraulic oil in the second hydraulic cylinder 19 flows into the oil container (an oil pan of a transmission).

According to the hydraulic control system in the hybrid power driving system of the present invention, the stroke of the piston rod of the hydraulic cylinder may be controlled accurately, thus the connection and disconnection of the power in the hybrid power driving system may be more reliable and accurate. In some embodiments, the controller in the hybrid power driving system may be selected widely, that is, the controller may be a control device, such as a Single Chip Microcomputer or a Programmable logic controller (PLC) and so on, also the controller may be an assembly of multiple control devices in the multiple components of the hybrid power driving system.

According to the hybrid power driving system of the present invention, due to the second oil pump 25 is located in the hybrid power driving system, the first hydraulic cylinder 9 may be acted by the second oil pump 25 to break off the connection between the engine 1 and the transmission mechanism 28 so as to cause the operation of the first electric motor 27 not to influence, even reversely drag the engine 1, before the first electric motor 27 starts the vehicle. During the normal operation, the first oil pump 26 driven by the first electric motor 27 may work as the pressure source of the hydraulic control system instead of the second oil pump 25.

Although explanatory embodiments have been shown and described, it would be appreciated by those skilled in the art that changes, alternatives, and modifications can be made in the embodiments without departing from the scope of the claims.

## Claims

1. A hybrid power driving system comprising: an engine (1), a first clutch (4), a transmission mechanism (28) including a transmission shaft (36), a first electric motor (27), a power supply and a hydraulic control system; wherein the engine (1) is coupled with the transmission shaft (36) via the first clutch (4), the first electric motor (27) is electrically coupled with the power supply and an electric motor shaft of the first electric motor (27) is coupled with the transmission mechanism (28); the hydraulic control system comprising:
an oil container for storing the hydraulic oil;
a first hydraulic cylinder (9) which includes a cylinder (37) and a piston rod (38) to do reciprocating motion along the inner wall of the cylinder (37); wherein the piston rod (38) is coupled with the first clutch (4) and is configured to control the engaged or disengaged condition of the first clutch (4); and
a first oil pump (26), which is driven by the first electric motor (27); the first oil pump (26) is configured to connect the oil container and the first hydraulic cylinder (9), supplying the hydraulic oil in the oil container to the first hydraulic cylinder (9); and
a controller which is electrically coupled with the first electric motor (27);
wherein the hydraulic control system further comprises an additional electric motor and a second oil pump (25); the additional electric motor is electrically coupled with the power supply and the controller respectively; the second oil pump (25) is driven by the additional electric motor, and the second oil pump (25) is configured to connect the oil container and the first hydraulic cylinder (9), supplying the hydraulic oil in the oil container to the cylinder (37) of the first hydraulic cylinder (9).

2. The hybrid power driving system of claim 1, wherein the oil container is an oil pan of a transmission including the transmission mechanism (28); the oil pan of the transmission further includes lubricating oil which is used as the hydraulic oil in the hydraulic control system.

3. The hybrid power driving system of claim 2, further comprising a second electric motor (34); wherein the output shaft of the engine (1) is coupled with the electric motor shaft (33) of the second electric motor (34) and the electric motor shaft (33) is coupled with the first clutch (4) and the transmission shaft (36).

4. The hybrid power driving system of claim 3, wherein the second electric motor comprises a stator (35) and a rotator; the electric motor shaft (33) is hollow and serves as the rotator.

5. The hybrid power driving system of claim 4, further comprising a connector having a chamber, which is configured to couple the main shaft of the engine (1) and the electric motor shaft (33) of the second electric motor (34); wherein the first clutch (4) is located in the chamber of the connector.

6. The hybrid power driving system of claim 5, wherein the connector is a part prepared in one body or has multiple components such as a flying wheel panel (2) and a clutch cover (6)

7. The hybrid power driving system of claim 3, wherein the hydraulic control system further comprises:
a first electromagnetic valve (17) for controlling the connection or disconnection between the oil container and the first hydraulic cylinder (9);
a second electromagnetic valve (12), by which the first oil pump and the second oil pump (25) are connected with the first hydraulic cylinder (9);
a first sensor (10) for detecting the hydraulic pressure in the first hydraulic cylinder (9);
wherein the controller is electrically coupled with the first electromagnetic valve (17), the second electromagnetic valve (12) and the first sensor (10) respectively, which controls operation of the second oil pump (25) and/or the first oil pump (26) and connection or disconnection of the first electromagnetic valve (17) and the second electromagnetic valve (12) according to a hydraulic oil pressure signal in the first hydraulic cylinder (9) detected by the first sensor (10).

8. The hybrid power driving system of claim 7, wherein the hydraulic control system further comprises a first energy accumulator (13), a first check valve (24) and a second check valve (42),wherein the first check valve (24) is configured to connect the first oil pump (26) and the second electromagnetic valve (12),and wherein the second check valve (42) is configured to connect the second oil pump (25) and the second electromagnetic valve (12) and the first energy accumulator (13) is connected with the first check valve (24), the second check valve (42) and the second electromagnetic valve (12), configured to store at least a part of hydraulic oil in the first check valve (24) and/or the second check valve (42) and supply the hydraulic oil to the cylinder (37) of the first hydraulic cylinder (9) during connection of the second electromagnetic valve (12).

9. The hybrid power driving system of claim 8, wherein the hydraulic control system further comprises a second sensor (22) for detecting the hydraulic pressure in the first energy accumulator (13); wherein the controller is electrically coupled with the second sensor (22) and the controller is adapted to control the operation of the first oil pump (26) with reference to the hydraulic pressure in the first energy accumulator (13) detected by the second sensor (22).

10. The hybrid power driving system of any of claims 8 and 9, wherein the hydraulic control system further comprises a safe valve (23) which is configured to connect the first energy accumulator (13) and the oil container.

11. The hybrid power driving system of any one of claims 7-10, wherein the hydraulic control system further comprises:
a second hydraulic cylinder (19), which comprises a cylinder (40) and a piston rode (41) to do reciprocating motion along the inner wall of the cylinder (40);
a third electromagnetic valve (14), which is configured to control the connection or disconnection between the first energy accumulator (13) and the second hydraulic cylinder (19);
a fourth electromagnetic valve (16), which is configured to control the connection or disconnection between the second hydraulic cylinder (19) and the oil container;
a third sensor (20), which is configured to detect the hydraulic pressure in the second hydraulic cylinder (19); and
a second energy accumulator (15), which is connected with the third electromagnetic valve (14) and the second hydraulic cylinder (19), configured to store at least a part of hydraulic oil passing through the third electromagnetic valve (14);
wherein, the third electromagnetic valve (14), the fourth electromagnetic valve (16) and the third sensor (20) are electrically coupled to the controller respectively and the controller is adapted to control the operation of the second oil pump (25) and /or the first oil pump (26) and the connection or disconnection between the third electromagnetic valve (14) and the fourth electromagnetic valve (16) with reference to the hydraulic pressure signal in the second hydraulic cylinder (19) detected by the third sensor (20).

12. The hybrid power driving system of any one of claim 7 to claim 10, wherein the hydraulic control system further comprises a damping device which comprises a first damping orifice (11) located between the second electromagnetic valve (12) and the first hydraulic cylinder (9) and a second damping orifice (18) located between the first electromagnetic valve (17) and the oil container.

13. The hybrid power driving system of claim 12, wherein the damping coefficient of the first damping orifice (11) is less than the damping coefficient of the second damping orifice (18).

## Patentansprüche

1. Hybridantriebssystem, aufweisend: einen Motor (1), eine erste Kupplung (4), eine Getriebeeinrichtung (28), die eine Getriebewelle (36) aufweist, einen ersten elektrischen Motor (27), eine Energieversorgung und ein Hydrauliksteuersystem; wobei der Motor (1) über die erste Kupplung (4) mit der Getriebewelle (36) gekoppelt ist, der erste elektrische Motor (27) mit der Energieversorgung elektrisch gekoppelt ist und eine Welle des elektrischen Motors des ersten elektrischen Motors (27) mit der Getriebeeinrichtung (28) gekoppelt ist; wobei das Hydrauliksteuersystem aufweist:
einen Ölbehälter zum Speichern des Hydrauliköls;
einen ersten Hydraulikzylinder (9), der einen Zylinder (37) und eine Kolbenstange (38) zur Hin- und Her-Bewegung entlang der Innenwand des Zylinders (37) aufweist; wobei die Kolbenstange (38) mit der ersten Kupplung (4) gekoppelt ist und konfiguriert ist, den eingerückten oder gelösten Zustand der ersten Kupplung (4) zu steuern; und
eine erste Ölpumpe (26), die vom ersten elektrischen Motor (27) angetrieben wird; wobei die erste Ölpumpe (26) konfiguriert ist, den Ölbehälter und den ersten Hydraulikzylinder (9) miteinander zu verbinden, wobei sie den ersten Hydraulikzylinder (9) mit dem Hydrauliköl im Ölbehälter versorgt; und
eine Steuerung, die mit dem ersten elektrischen Motor (27) elektrisch gekoppelt ist;
wobei das Hydrauliksteuersystem weiterhin einen zusätzlichen elektrischen Motor und eine zweite Ölpumpe (25) aufweist; wobei der zusätzliche elektrische Motor jeweils mit der Energieversorgung und der Steuerung elektrisch gekoppelt ist; wobei die zweite Ölpumpe (25) vom zusätzlichen elektrischen Motor angetrieben wird; und wobei die zweite Ölpumpe (25) konfiguriert ist, den Ölbehälter und den ersten Hydraulikzylinder (9) miteinander zu verbinden, wobei sie den Zylinder (37) des ersten Hydraulikzylinders (9) mit dem Hydrauliköl im Ölbehälter versorgt.

2. Hybridantriebssystem nach Anspruch 1, wobei der Ölbehälter eine Ölwanne eines Getriebes ist, die die Getriebeeinrichtung (28) aufweist, wobei die Ölwanne des Getriebes weiterhin Schmieröl aufweist, das als Hydrauliköl im Hydrauliksteuersystem verwendet wird.

3. Hybridantriebssystem nach Anspruch 2, weiterhin aufweisend einen zweiten elektrischen Motor (34); wobei die Abtriebswelle des Motors (1) mit der Welle (33) des elektrischen Motors des zweiten elektrischen Motors (34) gekoppelt ist und die Welle (33) des elektrischen Motors mit der ersten Kupplung (4) und der Getriebewelle (36) gekoppelt ist.

4. Hybridantriebssystem nach Anspruch 3, wobei der zweite elektrische Motor einen Stator (35) und einen Rotator aufweist; wobei die Welle (33) des elektrischen Motors hohl ist und als Rotator dient.

5. Hybridantriebssystem nach Anspruch 4, weiterhin aufweisend einen Verbinder, der eine Kammer aufweist und konfiguriert ist, die Hauptwelle des Motors (1) und der Welle (33) des elektrischen Motors des zweiten elektrischen Motors (34) miteinander zu koppeln; wobei die erste Kupplung (4) in der Kammer des Verbinders angeordnet ist.

6. Hybridantriebssystem nach Anspruch 5, wobei der Verbinder ein Teil ist, der einstückig hergestellt wird oder mehrere Komponenten wie eine Schwungradplatte (2) und einen Kupplungsdeckel (6) aufweist.

7. Hybridantriebssystem nach Anspruch 3, wobei das Hydrauliksteuersystem weiterhin aufweist:
ein erstes elektromagnetisches Ventil (17) zum Steuern der Verbindung oder der Trennung zwischen dem Ölbehälter und dem ersten Hydraulikzylinder (9);
ein zweites elektromagnetisches Ventil (12), über das die erste Ölpumpe und die zweite Ölpumpe (25) mit dem ersten Hydraulikzylinder (9) verbunden sind;
einen ersten Sensor (10) zum Erfassen des hydraulischen Drucks im ersten Hydraulikzylinder (9);
wobei die Steuerung jeweils mit dem ersten elektromagnetischen Ventil (17), dem zweiten elektromagnetischen Ventil (12) und dem ersten Sensor (10) elektrisch gekoppelt ist und den Betrieb der zweiten Ölpumpe (25) und/oder der ersten Ölpumpe (26) und die Verbindung oder Trennung des ersten elektromagnetischen Ventils (17) und des zweiten elektromagnetischen Ventils (12) gemäß einem Hydrauliköldrucksignal im ersten Hydraulikzylinder (9) steuert, das vom ersten Sensor (10) erfasst wird.

8. Hybridantriebssystem nach Anspruch 7, wobei das Hydrauliksteuersystem weiterhin einen ersten Energiespeicher (13), ein erstes Rückschlagventil (24) und ein zweites Rückschlagventil (42) aufweist, wobei das erste Rückschlagventil (24) konfiguriert ist, die erste Ölpumpe (26) und das zweite elektromagnetische Ventil (12) miteinander zu verbinden, und wobei das zweite Rückschlagventil (42) konfiguriert ist, die zweite Ölpumpe (25) und das zweite elektromagnetische Ventil (12) miteinander zu verbinden, und wobei der erste Energiespeicher (13) mit dem ersten Rückschlagventil (24), dem zweiten Rückschlagventil (42) und dem zweiten elektromagnetischen Ventil (12) verbunden ist und konfiguriert ist, zumindest einen Teil des Hydrauliköls im ersten Rückschlagventil (24) und/oder dem zweiten Rückschlagventil (42) zu speichern und den Zylinder (37) des ersten Hydraulikzylinders (9) während der Verbindung des zweiten elektromagnetischen Ventils (12) mit dem Hydrauliköl zu versorgen.

9. Hybridantriebssystem nach Anspruch 8, wobei das Hydrauliksteuersystem weiterhin einen zweiten Sensor (22) zum Erfassen des hydraulischen Drucks im ersten Energiespeicher (13) aufweist; wobei die Steuerung mit dem zweiten Sensor (22) elektrisch gekoppelt ist und die Steuerung ausgebildet ist, den Betrieb der ersten Ölpumpe (26) mit Bezug zum vom zweiten Sensor (22) erfassten hydraulischen Druck im ersten Energiespeicher (13) zu steuern.

10. Hybridantriebssystem nach einem der Ansprüche 8 und 9, wobei das Hydrauliksteuersystem weiterhin ein Sicherheitsventil (23) aufweist, das konfiguriert ist, den ersten Energiespeicher (13) und den Ölbehälter miteinander zu verbinden.

11. Hybridantriebssystem nach einem der Ansprüche 7-10, wobei das Hydrauliksteuersystem weiterhin aufweist:
einen zweiten Hydraulikzylinder (19), der einen Zylinder (40) und eine Kolbenstange (41) zur Hin- und Her-Bewegung entlang der Innenwand des Zylinders (40) aufweist;
ein drittes elektromagnetisches Ventil (14), das konfiguriert ist, die Verbindung oder Trennung zwischen dem ersten Energiespeicher (13) und dem zweiten Hydraulikzylinder (19) zu steuern;
ein viertes elektromagnetisches Ventil (16), das konfiguriert ist, die Verbindung oder Trennung zwischen dem zweiten Hydraulikzylinder (19) und dem Ölbehälter zu steuern;
einen dritten Sensor (20), der konfiguriert ist, den hydraulischen Druck im zweiten Hydraulikzylinder (19) zu erfassen; und
einen zweiten Energiespeicher (15), der mit dem dritten elektromagnetischen Ventil (14) und dem zweiten Hydraulikzylinder (19) verbunden ist und konfiguriert ist, zumindest einen Teil des Hydrauliköls zu speichern, das durch das dritte elektromagnetische Ventil (14) strömt;
wobei jeweils das dritte elektromagnetische Ventil (14), das vierte elektromagnetische Ventil (16) und der dritte Sensor (20) mit der Steuerung elektrisch gekoppelt sind und die Steuerung ausgebildet ist, den Betrieb der zweiten Ölpumpe (25) und/oder der ersten Ölpumpe (26) und die Verbindung oder Trennung zwischen dem dritten elektromagnetischen Ventil (14) und dem vierten elektromagnetischen Ventil (16) mit Bezug zum vom dritten Sensor (20) erfassten Hydraulikdrucksignal im zweiten Hydraulikzylinder (19) zu steuern.

12. Hybridantriebssystem nach einem der Ansprüche 7 bis 10, wobei das Hydrauliksteuersystem weiterhin eine Dämpfungseinrichtung aufweist, die eine erste Dämpfungsöffnung (11), die zwischen dem zweiten elektromagnetischen Ventil (12) und dem ersten Hydraulikzylinder (9) angeordnet ist, und eine zweite Dämpfungsöffnung (18) aufweist, die zwischen dem ersten elektromagnetischen Ventil (17) und dem Ölbehälter angeordnet ist.

13. Hybridantriebssystem nach Anspruch 12, wobei der Dämpfungskoeffizient der ersten Dämpfungsöffnung (11) kleiner ist als der Dämpfungskoeffizient der zweiten Dämpfungsöffnung (18).

## Revendications

1. Système d'entraînement hybride, comprenant: un moteur (1), un premier embrayage (4), un mécanisme (28) de transmission comprenant un arbre (36) de transmission, un premier moteur (27) électrique, une alimentation en énergie et un système de commande hydraulique ; le moteur (1) étant couplé à l'arbre (36) de transmission par le premier embrayage (4), le premier moteur (27) électrique étant couplé électriquement à l'alimentation en énergie, et un arbre de moteur électrique du premier moteur (27) électrique étant couplé au mécanisme (28) de transmission ; le système de commande hydraulique comprenant :
un réservoir à huile conçu pour stocker l'huile hydraulique ;
un premier cylindre (9) hydraulique qui comprend un cylindre (37) et une tige (38) de piston pour effectuer un mouvement de va-et-vient le long de la paroi interne du cylindre (37) ; la tige (38) du piston étant couplée au premier embrayage (4) et étant configurée pour commander la condition embrayée ou débrayée du premier embrayage (4) ; et
une première pompe (26) d'huile qui est entraînée par le premier moteur (27) électrique ; la première pompe (26) d'huile étant configurée pour relier le réservoir à huile et le premier cylindre (9) hydraulique, en amenant l'huile hydraulique dans le réservoir à huile au premier cylindre (9) hydraulique, et
une commande qui est couplée électriquement au premier moteur (27) électrique ;
le système de commande hydraulique comprenant en outre un moteur électrique additionnel et une deuxième pompe (25) à huile ; le moteur électrique additionnel étant couplé électriquement respectivement à l'alimentation en énergie et à la commande ; la deuxième pompe (25) à huile étant entraînée par le moteur électrique additionnel, et la deuxième pompe (25) à huile étant configurée pour relier le réservoir à huile et le premier cylindre (9) hydraulique, en amenant l'huile hydraulique dans le réservoir à huile au cylindre (37) du premier cylindre (9) hydraulique.

2. Système d'entraînement hybride selon la revendication 1, dans lequel le réservoir à l'huile est un carter d'huile d'une transmission comprenant un mécanisme (28) de transmission ; le carter d'huile de la transmission comprenant en outre de l'huile lubrifiante qui est utilisée comme huile hydraulique dans le système de commande hydraulique.

3. Système d'entraînement hybride selon la revendication 2, comprenant en outre un deuxième moteur (34) électrique ; l'arbre de sortie du moteur (1) étant couplé à l'arbre (33) de moteur électrique du deuxième moteur (34) électrique, et l'arbre (33) de moteur électrique étant couplé au premier embrayage (4) et à l'arbre (36) de transmission.

4. Système d'entraînement hybride selon la revendication 3, dans lequel le deuxième moteur électrique comprend un stator (35) et un rotateur ; l'arbre (33) de moteur électrique étant creux et servant de rotateur.

5. Système d'entraînement hybride selon la revendication 4, comprenant en outre un connecteur ayant une chambre, qui est configuré pour coupler l'arbre principal du moteur (1) et l'arbre (33) de moteur électrique du deuxième moteur (34) électrique ; le premier embrayage (4) étant disposé dans la chambre du connecteur.

6. Système d'entraînement hybride selon la revendication 5, dans lequel le connecteur est une partie fabriquée d'un seul tenant ou a des composants multiples comme une plaque (2) de volant d'inertie et un couvercle (6) d'embrayage.

7. Système d'entraînement hybride selon la revendication 3, dans lequel le système de commande hydraulique comprend en outre :
une première soupape (17) électromagnétique pour commander la connexion ou déconnexion entre le réservoir à huile et le premier cylindre (9) hydraulique ;
une deuxième soupape (12) électromagnétique par laquelle la première pompe d'huile et la deuxième pompe (25) d'huile sont reliées au premier cylindre (9) hydraulique ;
un premier capteur (10) pour détecter la pression hydraulique dans le premier cylindre (9) hydraulique ;
la commande étant couplée électriquement respectivement à la première soupape (17) électromagnétique, la deuxième soupape (12) électromagnétique, et le premier capteur (10), et commandant l'opération de la deuxième pompe (25) d'huile et/ou de la première pompe (26) d'huile, et la connexion ou déconnexion de la première soupape (17) électromagnétique et de la deuxième soupape (12) électromagnétique selon un signal de pression d'huile hydraulique dans le premier cylindre (9) hydraulique détecté par le premier capteur (10).

8. Système d'entraînement hybride selon la revendication 7, dans lequel le système de commande hydraulique comprend un premier accumulateur (13) d'énergie, un premier clapet (24) de retenue, et un deuxième clapet (42) de retenue, le premier clapet (24) de retenue étant configuré pour relier la première pompe (26) d'huile et la deuxième soupape (12) électromagnétique, et dans lequel le deuxième clapet (42) de retenue est configuré pour relier la deuxième pompe (25) d'huile et la deuxième soupape (12) électromagnétique, et le premier accumulateur (13) d'énergie est relié au premier clapet (24) de retenue, le deuxième clapet (42) de retenue, et la deuxième soupape (12) électromagnétique, et est configuré pour stocker au moins une partie d'huile hydraulique dans le premier clapet (24) de retenue et/ou le deuxième clapet (42) de retenue, et pour amener l'huile hydraulique au cylindre (37) du premier cylindre (9) hydraulique pendant la connexion de la deuxième soupape (12) électromagnétique.

9. Système d'entraînement hybride selon la revendication 8, dans lequel le système de commande hydraulique comprend en outre un deuxième capteur (22) pour détecter la pression hydraulique dans le premier accumulateur (13) d'énergie ; dans lequel la commande est couplée électriquement au deuxième capteur (22), et le capteur est adapté pour commander l'opération de la première pompe (26) d'huile par rapport à la pression hydraulique dans le premier accumulateur (13) d'énergie détecté par le deuxième capteur (22).

10. Système d'entraînement hybride selon l'une des revendications 8 et 9, dans lequel le système de commande hydraulique comprend en outre une soupape (23) de sécurité qui est configurée pour relier le premier accumulateur (13) d'énergie et le réservoir à huile.

11. Système d'entraînement hybride selon l'une des revendications 7-10, dans lequel le système de commande hydraulique comprend en outre :
un deuxième cylindre (19) hydraulique qui comprend un cylindre (40) et une tige (41) de piston pour effectuer un mouvement de va-et-vient le long de la paroi interne du cylindre (40) ;
une troisième soupape (14) électromagnétique qui est configurée pour commander la connexion ou déconnexion entre le premier accumulateur (13) d'énergie et le deuxième cylindre (19) hydraulique ;
une quatrième soupape (16) électromagnétique qui est configurée pour commander la connexion ou déconnexion entre le deuxième cylindre (19) hydraulique et le réservoir à huile ;
un troisième capteur (20) qui est configuré pour détecter la pression hydraulique dans le deuxième cylindre (19) hydraulique ; et
un deuxième accumulateur (15) d'énergie qui est relié à la troisième soupape (14) électromagnétique et le deuxième cylindre (19) hydraulique, et est configuré pour stocker au moins une partie d'huile hydraulique traversant la troisième soupape (14) électromagnétique ;
la troisième soupape (14) électromagnétique, la quatrième soupape (16) électromagnétique, et le troisième capteur (20) étant couplés électriquement à la commande, respectivement, et la commande étant adaptée pour commander l'opération de la deuxième pompe (25) d'huile et/ou la première pompe (26) d'huile et la connexion ou déconnexion entre la troisième soupape (14) électromagnétique et la quatrième soupape (16) électromagnétique par rapport au signal de pression hydraulique dans le deuxième cylindre (19) hydraulique détecté par le troisième capteur (20).

12. Système d'entraînement hybride selon l'une des revendications 7 à 10, dans lequel le système de commande hydraulique comprend en outre un dispositif d'amortissement qui comprend un premier orifice (11) d'amortissement disposé entre la deuxième soupape (12) électromagnétique et le premier cylindre (9) hydraulique et un deuxième orifice (18) d'amortissement disposé entre la première soupape (17) électromagnétique et le réservoir à huile.

13. Système d'entraînement hybride selon la revendication 12, dans lequel le coefficient d'amortissement du premier orifice (11) d'amortissement est inférieur au coefficient d'amortissement du deuxième orifice (18) d'amortissement.
